(19) Europäisches Patentamt
European Patent Office
Office européen des brevets

(11) **EP 1 959 115 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(51) Int Cl.:
***F02C 9/28*** *(2006.01)*

(21) Anmeldenummer: **07106215.2**

(22) Anmeldetag: **16.04.2007**

(54) **Verfahren zur Bestimmung des Wassergehalts im Arbeitsfluid einer Gasturbinenanlage**

Method for determination of the water content in the working fluid of a gas turbine

Procédé de détermination du contenu d'eau dans le fluide de travail d'un turbine à gaz

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.02.2007 DE 102007008296**

(43) Veröffentlichungstag der Anmeldung:
**20.08.2008 Patentblatt 2008/34**

(73) Patentinhaber: **Ansaldo Energia IP UK Limited London W1G 9DQ (GB)**

(72) Erfinder:
• **Kokanovic, Stanka**
  **5400, Baden (CH)**
• **Nemet, Anton**
  **5415, Nussbaumen (CH)**

(74) Vertreter: **Bernotti, Andrea et al**
  **Studio Torta S.p.A.**
  **Via Viotti, 9**
  **10121 Torino (IT)**

(56) Entgegenhaltungen:
**EP-A1- 0 616 118     EP-A2- 1 231 369**
**WO-A1-2004/072453     DE-C1- 19 727 597**
**US-A1- 2003 217 554**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die Erfindung betrifft ein Verfahren zur Bestimmung des Wassergehalts im Arbeitsfluid einer Gasturbinenanlage gemäß Anspruch 1.

Stand der Technik

Nach dem gegenwärtigen Stand der Technik ist der dominante Einfluss einer Variation des Wassergehalts im Arbeitsfluid einer Gasturbinenanlage und deren Wirkung auf die Arbeitslinien der einzelnen Gasturbinenkomponenten hinreichend untersucht und bekannt. Diese Erkenntnis ist insbesondere bei der Regelung der Feuerungstemperatur einer Gasturbine heutiger Bauart von praktischer Relevanz, um die enormen Anforderungen an die hochbelasteten Komponenten dieser Gasturbinen hinsichtlich Lebensdauer und Emissionen erfüllen zu können.

Die Regelung der Feuerungstemperatur einer Gasturbine abhängig vom Wassergehalt eines Arbeitmediums der Gasturbine ist in der EP 1 231 369 A2 beschrieben. Bei dieser bekannten Regelung wird der Wassergehalt der in den Verdichter der Gasturbine einströmender Luft bestimmt und als weiterer Parameter für die Bestimmung der Verbrennungstemperatur verwendet. Für die Bestimmung des Wassergehalts werden ein oder mehrere Sensoren verwendet, die insbesondere auch in der Maschine stromabwärts einer Wassereinspritzung platziert sind.

Aus der US 2003/0217554 A1 ist ein Verfahren bekannt, bei dem eine Messung der Feuchtkugeltemperatur und der Trockenkugeltemperatur zur Bestimmung des Wassergehaltes im Ansaugstrom einer Gasturbine genutzt wird.

Darstellung der Erfindung

In Verfahren zur automatischen Regelung einer oder mehrerer Feuerungstemperaturen einer Gasturbinenanlage wird der Wassergehalt im Arbeitsfluid verwendet. Aufgabe der vorliegenden Erfindung ist es ein Verfahren zur Bestimmung des Wassergehalts im Arbeitsfluid einer Gasturbinenanlage vorzuschlagen.

Für ein Verfahren zur automatischen Regelung einer oder mehrerer Feuerungstemperaturen einer Gasturbinenanlage kann mit einem Verfahren mit den Merkmalen von Anspruch 1 zur Bestimmung des Wassergehalts im Arbeitsfluid einer Gasturbinenanlage der Wassergehalt im Arbeitsfluid bereitgestellt werden. Weitere Ausgestaltungen der Erfindung ergeben sich aus den abhängigen Ansprüchen.

Ein Verfahren zur automatischen Regelung einer oder mehrerer Feuerungstemperaturen einer Gasturbine, welches nicht Teil der vorliegenden Erfindung ist, kann mit den folgenden Schritten vorgesehen werden:
Messen mehrerer Temperaturen des Arbeitsfluids der Gasturbinenanlage an verschiedenen Positionen in der Gasturbinenanlage, Messen mehrerer Drücke des Arbeitsfluids an verschiedenen Positionen in der Gasturbinenanlage, Ermitteln des Wassergehalts des durch die Gasturbinenanlage strömenden Arbeitsfluids unter Berücksichtigung der gemessenen Temperatur- und Druckwerte, und Einstellen mindestens einer Feuerungstemperatur der Gasturbinenanlage abhängig vom ermittelten Wassergehalt.

Mit dem erfindungsgemäßen Verfahren zur Bestimmung des Wassergehaltes wird durch indirekte Messungen im Unterschied zu direkten und technisch aufwendigen Feuchtigkeitsmessungen in der Maschine der Wassergehalt des durch die Gasturbinenanlage strömenden Arbeitsfluids ermittelt. Der Wassergehalt des durch die Gasturbinenanlage strömenden Arbeitsfluids kann für die Einstellung mindestens einer Feuerungstemperatur der Gasturbinenanlage verwendet. Dabei sind die indirekten Messungen Druck- und Temperaturmessungen, die insbesondere schneller durchgeführt werden als direkte Feuchtemessungen.

Ein wesentlicher Gedanke der Erfindung besteht darin, mittels Druckmessungen auf den Wassergehalt des durch eine Gasturbinenanlage strömenden Arbeitsfluids zu schließen. Abhängig von dem so ermittelten Wassergehalt kann dann eine oder mehrere Feuerungstemperaturen der Anlage automatisch, insbesondere rechnergesteuert eingestellt werden. Das erfindungsgemäße Verfahren bietet eine Alternative zur direkten Messung der Arbeitsfluidzusammensetzung und des Wassergehalts an, indem der Wassergehalt des durch die Turbine strömenden Arbeitsfluids mittels einem auf Druckmessungen basierenden indirekten Verfahren bestimmt wird. Der ermittelte Wassergehalt kann durch mathematische Korrelationen im Algorithmus für die Regelung der Feuerungstemperatur berücksichtigt werden.
Durch das erfindungsgemässe Verfahren wird aufgrund der Druckmessungen der gesamte Wassergehalt des durch die Turbine strömenden Arbeitsfluids ermittelt. Es kann zur Einstellung der Gasturbinenfeuerungstemperatur herangezogen. Die Erfindung ermöglicht durch die Druck- und Temperaturmessung eine signifikant verbesserte Regelgenauigkeit über einen sehr weiten Bereich von Umgebungs- und Lastbedingungen einer Gasturbine. Insbesondere ermöglicht das erfindungsgemässe Verfahren eine im Vergleich zum Stand der Technik schnellere Kompensierung der Feuerungstemperatur und damit einen erhöhten Überfeuerungsschutz.

Vor allem zeichnet sich die Erfindung dadurch aus, dass mit einem indirekten Messverfahren sowohl der Einfluss aller extern eingespritzten Wasser- oder Dampfmengen als auch die mit der Verbrennungsluft aus der Umgebung zugeführte Luftfeuchte bestimmt werden kann. Gemäß einer Ausführungsform der Erfindung können die Arbeitsfluidtemperatur und die Verdichtereintrittstemperatur oder die Umgebungstemperatur gemessen und beim Ermitteln des Wassergehalts des durch die Gasturbinenanlage strömenden Arbeitsfluids berücksichtigt werden. Gemäß einer weiteren Ausführungsform der Erfindung wird ein Druck vor dem Turbineneinlass gemessen und beim Ermitteln des Wassergehalts des durch die Gasturbinenanlage strömenden Arbeitsfluids berücksichtigt werden. Beispielsweise kann als Druck vor dem Turbineneinlass der Turbineneintrittsdruck, der Verdichteraustrittsdruck, der Brennkammereintrittsdruck oder der Brennkammeraustrittsdruck gemessen werden.

Weiterhin wird gemäß einer Ausführungsform der Erfindung der Turbinenaustrittsdruck oder der Umgebungsdruck zusammen mit dem Druckverlust vom Turbinenaustritt bis zu einem Kamin der Gasturbinenanlage gemessen und beim Ermitteln des Wassergehalts des durch die Gasturbinenanlage strömenden Arbeitsfluids berücksichtigt.

Gemäß einer weiteren Ausführungsform der Erfindung wird der Stellwinkel einer Verdichtervorleitreihe der Gasturbinenanlage gemessen und beim Ermitteln des Wassergehalts des durch die Gasturbinenanlage strömenden Arbeitsfluids berücksichtigt.

Gemäss einer weiteren Ausführungsform der Erfindung wird zusätzlich die Umgebungsfeuchte gemessen, um mögliche Effekte infolge Alterung und/oder Verschmutzung der Gasturbine, die sich in einer Änderung der nominalen Ansaugmengencharakteristik des Verdichters auswirken können, kontinuierlich oder zu diskreten Zeitpunkten zu kompensieren. Damit kann ein Abgleich der unter Berücksichtigung mehrerer Drücke des Arbeitsfluids ermittelten Einstellung einer Feuerungstemperatur der Gasturbinenanlage vorgenommen werden.

In einer Weiterbildung des erfindungsgemässen Verfahrens wird beim Ermitteln des Wassergehalts des durch die Gasturbinenanlage strömenden Arbeitsfluids die Massenströme von zu- und abgeführten Wasser-/Dampfmengen berücksichtigt. Beispielsweise wird zugeführtes Wasser infolge eines Verdampfungskühlers, zugeführtes Wasser infolge eines "Fogging"- oder "High Fogging"-Systems, abgeführtes Wasser infolge eines Kühlers und/oder einer Wasser- oder Dampfeinspritzung zur Leistungssteigerung oder zur Emissionsregelung entweder in die Brennkammer oder in das Kühlluftsystem der Gasturbine berücksichtigt.

Die Erfindung betrifft zudem eine Gasturbinenanlage gemäß Anspruch 14. Die erfindungsgemäße Gasturbinenanlage umfasst einen Steuerrechner, dem als Eingangssignale Messwerte der Arbeitsfluidtemperatur, wie z.B. der Verdichtereintrittstemperatur oder der Umgebungstemperatur und mehrere Drücke des Arbeitsfluids der Gasturbinenanlage an verschiedenen Positionen in der Gasturbinenanlage zugeführt werden, und der derart eingerichtet ist, dass er den Wassergehalt des durch die Gasturbinenanlage strömenden Arbeitsfluids unter Berücksichtigung der zugeführten Eingangssignale ermittelt.

Die Gasturbinenanlage kann gemäß einer Ausführungsform der Erfindung eine sequenzielle Verbrennung mit mehr als einer Brennkammer oder gemäß einer alternativen Ausführungsform der Erfindung eine einzige Brennkammer aufweisen.

Weitere Vorteile und Anwendungsmöglichkeiten der vorliegenden Erfindung ergeben sich aus der nachfolgenden Beschreibung in Verbindung in dem in der Zeichnung dargestellten Ausführungsbeispiel. In der Beschreibung, in den Ansprüchen, in der Zusammenfassung und in der Zeichnung werden die in der hinten angeführten Liste der Bezugszeichen verwendeten Begriffe und zugeordneten Bezugszeichen verwendet.

Kurze Beschreibung der Zeichnungen

Die einzige Zeichnung zeigt ein Schema einer Gasturbinenanlage, die zur Durchführung des Verfahrens zur Bestimmung des Wassergehaltes geeignet ist, insbesondere des Verfahrens gemäss einer ersten Implementierung der Erfindung.

Wege zur Ausführung der Erfindung

Die einzige Figur zeigt schematisch ein Beispiel einer Gasturbinenanlage, in der das erfindungsgemässe Verfahren angewendet werden kann. Umgebungsluft 1 gelangt in den Einlass 2 eines Verdichters, mit dem die angesaugte Umgebungsluft verdichtet wird, um am Auslass 3 des Verdichters in den Einlass 4 einer Brennkammer 12 einzuströmen. In die Brennkammer 12 wird über eine Brennstoffzuleitung 13 ein Brennstoff eingespritzt, der zusammen mit der hochverdichteten Luft ein zündfähiges Brennstoff-Luftgemisch ergibt, das in der Brennkammer 12 gezündet wird. Das bei der Verbrennung des Gemisches entstehende heiße Arbeitsfluid strömt unter hohem Druck über einen Brennkammerauslass 5 aus der Brennkammer 12 und in einen Einlass 6 einer Turbine 14 ein. In der Turbine 14 entspannt das heiße Arbeitsfluid unter Arbeitsabgabe und gelangt über einen Turbinenauslass 7 und einen Kamin 8 in die Atmosphäre. Durch die Entspannung des heißen Arbeitsfluids wird die Turbine 14 und eine mit ihr gekoppelte Last angetrieben, beispielsweise ein Stromgenerator 9. Die elektrische Spannung der vom Generator 9 erzeugten elektrischen Energie wird in einer Umspannstation auf eine zum Einspeisen in ein elektrisches Versorgungsnetz erforderliche elektrische Spannung transformiert.

Bei dieser Gasturbinenanlage wird die Feuerungstemperatur in der Brennkammer 12 mit einer rechnergestützten Regelungsvorrichtung 16 geregelt, der gemäß der Erfindung mehrere mögliche Messwerte als Eingangssignale über entsprechende Signalleitungen 18a - 18k zugeführt werden und mit einem Algorithmus, der das erfindungsgemäße Verfahren implementiert, verarbeitet. (In der Figur sind hierzu Beispiele von möglichen Signalleitungen eingezeichnet, wobei eine Auswahl der Signalleitungen für die Erfindung bereits genügend sind, wie es nachfolgend im Zusammenhang mit Varianten einer ersten Implementierung des Verfahrens erläutert ist.) Abhängig von der Verarbeitung der zugeführten Messwerte durch die Regelungsvorrichtung 16 wird eine optimale Einstellung der Feuerungstemperatur ermittelt. Zum Erzielen dieser optimalen Feuerungstemperatur wird ein entsprechendes Stellsignal über eine Stellsignalleitung 20 an die Gasturbinenanlage, insbesondere deren Brennersteuerung, abgegeben. Beispielsweise, wird das Stellsignal zur Regelung eines Ventils in der Brennstoffzuleitung 13 verwendet.

In einer Variante kann eine zusätzliche Stellsignalleitung 20' von der Regelvorrichtung 16 zur Vorleitreihe des Verdichters führen zwecks Übertragung eines weiteren Stellsignals zur Steuerung des Stellwinkels der Verdichtervorleitreihe.

Beim erfindungsgemässen Verfahren wird aufgrund von Druckmessungen und Temperaturmessungen der Wassergehalt im Arbeitsfluid ermittelt. Mit dem Wassergehalt im Arbeitsfluid kann die Feuerungstemperatur entsprechend dem Einfluss des Wassergehalts geregelt werden. Zusätzlich können in dem Verfahren die Massenströme von Wassermengen, die der Gasturbine zu- und abgeführt werden festgestellt werden und bei der Bestimmung des Wassergehaltes berücksichtigt werden. Dadurch wird ein sehr viel breiterer Anwendungsbereich des Verfahrens eröffnet, wie beispielsweise für den zukünftigen Einsatz der Gasturbinentechnologie in Kohlevergasungs- oder Synthesegaserzeugungsanlagen.

Im Folgenden werden nun physikalische Zusammenhänge des Arbeitsfluids, d.h. des Gases in der Turbine für das Verständnis der Erfindung erläutert und gezeigt, wie anhand dieser Zusammenhänge Druckmessungen des Arbeitsfluids an verschiedenen Positionen in der Gasturbine für die Ermittlung des Wassergehalts im Arbeitsfluids gemäß der Erfindung verwendet werden können.

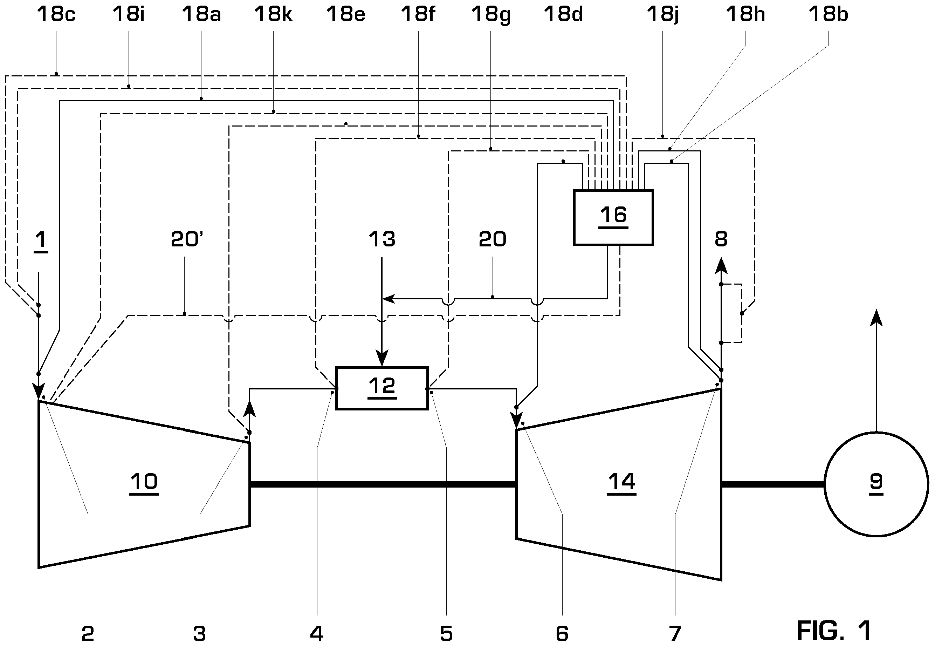

Die Erfindung setzt bei der allgemein bekannten Beziehung zur Beschreibung einer isentropen Entspannung in der Turbine einer Gasturbine an (die Indizes in den folgenden Gleichungn beziehen sich auf die einzelnen in der Fig. 1 bezeichneten Punkte):

$$\frac{T_6}{T_{7s}} = \left(\frac{p_6}{p_7}\right)^{\frac{\kappa-1}{\kappa}}$$

(Gleichung 1)

wobei die Parameter T für gemessene Temperatur und p für gemessenen Druck stehen und k den Isotropenkoeffizienten bezeichnet.

Unter Berücksichtigung der Irreversibilität des Entspannungsprozesses in einer realen Turbine ist es zweckmäßig, den betreffenden Vorgang über eine polytrope Zustandsänderung zu beschreiben:

$$\frac{T_6}{T_7} = \left(\frac{p_6}{p_7}\right)^{\frac{n-1}{n}} = \left(\frac{p_6}{p_7}\right)^{\eta_p \cdot \frac{\kappa-1}{\kappa}}$$

(Gleichung 2)

Im Sonderfall des idealen Gases ist der Isentropenexponent k über die Beziehung

$$\kappa = \frac{c_p}{c_v}$$

(Gleichung 3)

definiert, wobei die spezifischen Wärmekapazitäten $c_p$ und $c_v$ wiederum über die spezifische Gaskonstante R miteinander in Beziehung stehen:

$$c_p - c_v = R$$

(Gleichung 4)

Die aus einer Variation der Brennstoffzusammensetzung und weiterer Betriebsparameter wie beispielsweise dem Brennstoff-Luft-Verhältnis resultierende Änderung der spezifischen Gaskonstante R wie auch der spezifischen Wärmekapazitäten $c_p$ und $c_v$ führt zu einer Abhängigkeit des Isentropenexponenten k von spezifischen Betriebsbedingungen. Weiterhin ergibt sich aus der Lastabhängigkeit der Charakteristik für den polytropen Turbinenwirkungsgrad $\eta_p$, welcher auf Basis von Prototypmessungen oder detaillierten 3D-CFD-Rechenmethoden bestimmt werden kann, eine hinreichende Komplexität für die Abbildung des realen Turbinenverhaltens unter Verwendung der obigen Gleichung 2.

Eine weitere zu berücksichtigende Bedingung resultiert aus der allgemein als Kegelgesetz von Stodola bekannten Beziehung zur Beschreibung der Schluckfähigkeit einer Turbine, die in der einfachsten Formulierung für ideale Gase und unter Vernachlässigung von Grenzschichteffekten infolge Schaufelkühlung wie folgt geschrieben werden kann:

$$\dot{m}_{T,red}^* = \frac{\dot{m}_6}{\dot{m}_{6,0}} \cdot \frac{p_{6,0}}{p_6} \cdot \frac{\sqrt{R_6 \cdot T_6}}{\sqrt{R_{6,0} \cdot T_{6,0}}} \overset{!}{=} konst.$$

(Gleichung 5)

wobei der Index '0' in Gleichung 5 den Auslegungswert des betreffenden Parameters im Auslegungszustand der Turbine bezeichnet.

Insbesondere wird aus obiger Gleichung der Einfluss der spezifischen Gaskonstante $R_6$ am Turbineneintritt ersichtlich, welche bei unveränderter Temperatur $T_6$ und zunächst konstant betrachtetem Massenstrom $m_6$ am Turbineneintritt zu einem Anstieg des Turbineneintrittsdrucks $p_6$ führt, wenn mit steigendem Arbeitsfluidwassergehalt die spezifische Gaskonstante $R_6$ am Turbineneintritt erhöht wird, und umgekehrt.

Unter weiterer Berücksichtigung der Verdichtercharakteristik in der Formulierung

$$\dot{m}_{V,red}^* = \frac{\dot{m}_2}{\dot{m}_{2,0}} \cdot \frac{p_{2,0}}{p_2} \cdot \frac{\sqrt{R_2 \cdot T_2}}{\sqrt{R_{2,0} \cdot T_{2,0}}} = f\left(\dot{n}_{red}^*, \pi_V\right)$$

(Gleichung 6)

mit

$$\dot{n}_{red}^* = \frac{n}{n_0} \cdot \frac{\sqrt{R_{2,0} \cdot T_{2,0}}}{\sqrt{R_2 \cdot T_2}}$$

(Gleichung 7)

und

$$\pi_V = \frac{p_3}{p_2}$$

(Gleichung 8)

wird erkennbar, dass der Verdichteransaugmassenstrom $m_2$ unmittelbar von der spezifischen Gaskonstanten $R_2$ am Verdichtereintritt abhängt und sich mit zunehmender Luftfeuchte reduziert und umgekehrt.

Die daraus resultierende Änderung des oben zunächst noch konstant betrachteten Massenstroms $m_6$ am Turbineneintritt führt schließlich zu einer Überlagerung dieser beiden zuvor unabhängig betrachteten Effekte für Turbine und Verdichter, welche aufgrund der Rückwirkung auf die Beschreibung der polytropen Entspannung gemäß Gleichung 2 eine besondere Berücksichtigung bei der Implementierung der oben dargelegten Zusammenhänge in einer Regelung der Gasturbine erfordern.

Insbesondere wird mit der vorliegenden Erfindung die oben formulierte Abhängigkeit des Turbineneintrittsdrucks $p_6$ vom Arbeitsfluidwassergehalt nutzbar gemacht, indem mittels eines auf Druckmessungen basierenden indirekten Verfahrens auf den Wassergehalt des durch die Turbine strömenden Arbeitsfluids geschlossen wird. Der beschriebene Einfluss kann dann insbesondere durch mathematische Korrelationen im Algorithmus für die Regelung der Feuerungstemperatur kompensiert werden. Die regelungstechnische Umsetzung hängt hierbei wesentlich vom Typ und technischen Aufbau der eingesetzten Gasturbine und würde daher im Rahmen dieser Beschreibung zu weit führen.

Im Folgenden werden verschiedene Implementierungen eines Verfahrens gemäß der Erfindung in die Regelung einer Gasturbine anhand der zu regelnden Parameter des Gasturbine und der für die Regelung zu berücksichtigenden Messgrößen in Anlehnung an Figur 1 und den darin offenbarten Signalleitungen erläutert. Da die erläuterten Implementierungen vorzugsweise in Form von Regelungsalgorithmen in Regelungsvorrichtungen einer Gasturbinenanlage implementiert werden, wird bewusst wird bei der folgenden Beschreibung auf technische Implementierungsdetails verzichtet, da dies die Erläuterung komplexer und konkreter Computerprogramme erfordern würde, was den Rahmen dieser Beschreibung sprengen würde. Zudem hängt eine konkrete Implementierung in einer Regelung wie bereits oben angedeutet wesentlich vom Typ und Aufbau der entsprechenden Gasturbine, insbesondere von konkreten technischen Maschinendetails ab. Mit dem durch das erfindungsgemäße Verfahren ermittelten Wassergehalt kann ein Verfahren zur Regelung wenigstens einer der nachfolgend aufgeführten Feuerungstemperaturen (oder Kombinationen aus diesen) für die Einhaltung der spezifizierten Bauteillebensdauern und Emissionen einer Gasturbinenanlage beschickt werden:

- Brennkammeraustrittstemperatur ($T_5$)
- Turbineneintrittstemperatur ($T_6$) gemäß API 616
- Turbineneintrittstemperatur ($T_6'$ am Eintritt erste Turbinenlaufreihe) gemäß ANSI B 133.1
- Turbineneintrittstemperatur ($T_6$) gemäß ISO 2314:1989 Für die Durchführung des Verfahrens zur Bestimmung des Wassergehalts können folgende Messgrößen berücksichtigt werden:

  - Arbeitsfluidtemperatur am Turbinenaustritt ($T_7$, Signalleitung 18b), und
  - Turbineneintrittsdruck ($p_6$, Signalleitung 18d) oder Verdichteraustrittsdruck ($p_3$, Signalleitung 18e) oder Brennkammereintrittsdruck ($p_4$, Signalleitung 18f) oder Brennkammeraustrittsdruck ($p_5$, Signalleitung 18g), und
  - Turbinenaustrittsdruck ($p_7$, Signalleitung 18h) oder Umgebungsdruck ($p_1$, Signalleitung 18i) und Druckverlust (Signalleitungen 18j und 18h) von Turbinenaustritt bis Kamin ($p_7$ - $p_8$) und
  - Verdichtereintrittstemperatur ($T_2$, Signalleitung 18a) oder Umgebungstemperatur ($T_1$), Signalleitung 18c). Zusätzlich, falls anwendbar, kann auch der
  - Stellwinkel der Verdichtervorleitreihe gemessen werden und über eine Signalleitung 18k der Regelungsvorrichtung 16 zugeführt werden.

Bei sämtlichen Druckmessungen handelt es sich um Absolutdruck (total oder statisch) oder Atmosphärenüberdruck (total oder statisch).

Die Figur 1 zeigt Signalleitungen 18a, 18b, 18d und 18h als durchgezogene Linien. Diese Signalleitungen zeigen eine erste Variante einer Gasturbinenanlage auf, die zur Durchführung gemäss der ersten Implementierung des Verfahrens geeignet ist. Die erwähnten Signalleitungen dienen der Übertragung der Turbinenaustrittstemperatur (T7), des Turbineneintrittsdrucks (p6), des Turbinenaustrittsdrucks (p7) bzw. der Verdichtereintrittstemperatur (T2). Die weiteren, durch gestrichelte Linien angezeigten Signalleitungen (18c, 18e-g, 18i-k) zeigen weitere Varianten von Gasturbinenanlagen zur Durchführung des Verfahrens an. Die gestrichelten Signalleitungen entsprechen Leitungen für die Übertragung von Messwerten an die Regelungsvorrichtung 16, wie in der obigen Liste aufgezeigt.

Eine zweite Implementierung betrifft eine Erweiterung des Verfahrens zur Kompensation des Wassergehalts im Arbeitsfluid der Turbine, indem die folgenden Messgrößen der zu- und abgeführten Wasser-/Dampfmengen zusätzlich berücksichtigt werden:
falls anwendbar: Massenströme aller zu- und abgeführten Wasser-/Dampfmengen wie

- zugeführtes Wasser infolge eines Verdampfungskühlers,
- zugeführtes Wasser infolge eines "Fogging"- oder "High Fogging"-Systems,
- abgeführtes Wasser infolge eines Kühlers,
- Wasser/Dampfeinspritzung zur Leistungssteigerung oder zur Emissionsregelung (entweder in die Brennkammer oder in das Kühlluftsystem der Gasturbine).

Die in der Figur dargestellte Gasturbinenanlage weist eine Brennkammer auf. Wie bereits erwähnt, eignet sich das erfindungsgemässe Verfahren auch für Gasturbinenanlagen mit mehr als einer Brennkammer, zum Beispiel mit sequentiell angeordneten Brennkammern.

**Bezugszeichenliste**

1 Umgebungsluft
2 Verdichtereinlass
3 Verdichterauslass
4 Brennkammereintritt
5 Brennkammeraustritt
6 Turbineneintritt
7 Turbinenaustritt
8 Kamin
9 Generator
10 Verdichter
12 Brennkammer
14 Turbine
13 Brennstoffzuleitung
16 Rechnersteuerung
18a-18k Signalleitungen für Messgrössen (Druck und Temperatur, Stellwinkel der Verdichtervorleitreihe)
20 Stellsignalleitung für Feuerungstemperatur(en)
20' Stellsignalleitung für Stellwinkel der Verdichtervorleitreihe

**Patentansprüche**

1. Verfahren zur Bestimmung des Wassergehalts im Arbeitsfluid einer Gasturbinenanlage, mit den folgenden Schritten:

   Messen mehrerer Temperaturen des Arbeitsfluids der Gasturbinenanlage an verschiedenen Positionen in der Gasturbinenanlage,
   Messen mehrerer Drücke des Arbeitsfluids an verschiedenen Positionen in der Gasturbinenanlage, und
   indirekte Messung des Wassergehalts des durch die Gasturbinenanlage strömenden Arbeitsfluids durch die gemessenen Druck- und Temperaturwerte.

2. Verfahren nach Anspruch 1,
   **dadurch gekennzeichnet, dass**
   zum einen die Arbeitsfluidtemperatur und zum anderen die Verdichtereintrittstemperatur oder die Umgebungstemperatur gemessen und zur indirekten Messung des Wassergehalts des durch die Gasturbinenanlage strömenden Arbeitsfluids verwendet werden.

3. Verfahren nach Anspruch 1 oder 2,
   **dadurch gekennzeichnet, dass**
   ein Druck vor dem Turbineneinlass gemessen und zur indirekten Messung des Wassergehalts des durch die Gasturbinenanlage strömenden Arbeitsfluids verwendet wird.

4. Verfahren nach Anspruch 3,
   **dadurch gekennzeichnet, dass**
   als Druck vor dem Turbineneinlass der Turbineneintrittsdruck, der Verdichteraustrittsdruck, der Brennkammereintrittsdruck (p4) oder der Brennkammeraustrittsdruck gemessen wird.

5. Verfahren nach einem der Ansprüche 1 bis 4,
   **dadurch gekennzeichnet, dass**
   der Turbinenaustrittsdruck oder der Umgebungsdruck und der Druckverlust vom Turbinenaustritt bis zu einem Kamin der Gasturbinenanlage gemessen und zur indirekten Messung des Wassergehalts des durch die Gasturbinenanlage strömenden Arbeitsfluids verwendet wird.

**6.** Verfahren nach einem der Ansprüche 1 bis 4,
**dadurch gekennzeichnet, dass**
die Arbeitsfluidtemperatur am Turbinenaustritt ($T_7$),
und
der Turbineneintrittsdruck ($p_6$) oder
der Verdichteraustrittsdruck ($p_3$) oder
der Brennkammereintrittsdruck ($p_4$) oder
der Brennkammeraustrittsdruck ($p_5$),
und
der Turbinenaustrittsdruck ($p_7$) oder
der Umgebungsdruck ($p_1$) und der Druckverlust von Turbinenaustritt bis Kamin ($p_7 - p_8$)
und
der Verdichtereintrittstemperatur ($T_2$) oder die Umgebungstemperatur ($T_1$)
gemessen und zur indirekten Messung des Wassergehalts des durch die Gasturbinenanlage strömenden Arbeitsfluids verwendet werden.

**7.** Verfahren nach einem der Ansprüche 1 bis 5,
**dadurch gekennzeichnet, dass**
zusätzlich die Umgebungsfeuchte gemessen wird und der Wert der Umgebungsfeuchte zur Kompensierung von
Alterungs- oder Verschmutzungseffekten in der Gasturbine verwendet werden.

**8.** Verfahren nach einem der Ansprüche 1 bis 7,
**dadurch gekennzeichnet, dass**
ferner der Stellwinkel einer Verdichtervorleitreihe der Gasturbinenanlage gemessen und zur indirekten Messung
des Wassergehalts des durch die Gasturbinenanlage strömenden Arbeitsfluids verwendet wird.

**9.** Verfahren nach einem der vorhergehenden Ansprüche
**dadurch gekennzeichnet, dass**
zur indirekten Messung des Wassergehalts des durch die Gasturbinenanlage strömenden Arbeitsfluids ferner Massenströme aller zu- und abgeführten Wasser-/Dampfmengen verwendet werden.

**10.** Verfahren nach Anspruch 9,
**dadurch gekennzeichnet, dass** zur indirekten Messung des Wassergehalts
zugeführtes Wasser infolge eines Verdampfungskühlers verwendet wird.

**11.** Verfahren nach Anspruch 9 oder 10,
**dadurch gekennzeichnet, dass** zur indirekten Messung des Wassergehalts
zugeführtes Wasser infolge eines "Fogging"- oder "High Fogging"-Systems verwendet wird.

**12.** Verfahren nach Anspruch 9, 10 oder 11,
**dadurch gekennzeichnet, dass** zur indirekten Messung des Wassergehalts
abgeführtes Wasser infolge eines Kühlers verwendet wird.

**13.** Verfahren nach einem der Ansprüche 9-12,
**dadurch gekennzeichnet**, das zur indirekten Messung des Wassergehalts
eine Wasser- oder Dampfeinspritzung zur Leistungssteigerung oder zur Emissionsregelung entweder in die Brennkammer oder in das Kühlluftsystem der Gasturbine verwendet wird.

**14.** Gasturbinenanlage umfassend

   - einen Verdichter (10),
   - eine Brennkammer (12),
   - eine Turbine (14) und
   - einen Steuerrechner

zur automatischen Regelung, dem über eine oder mehrere Signalleitungen (18a-18k) als Eingangssignale Messwerte der Arbeitsfluidtemperatur und mehrere Drücke des Arbeitsfluids der Gasturbinenanlage an verschiedenen
Positionen in der Gasturbinenanlage zugeführt werden, und der derart eingerichtet ist, dass der Wassergehalt des durch die Gasturbinenanlage strömenden Arbeitsfluids durch die zugeführten Eingangssignale indirekt messbar ist.

15. Gasturbinenanlage nach Anspruch 14,
**dadurch gekennzeichnet, dass**
sie eine sequenzielle Verbrennung aufweist.

16. Gasturbinenanlage nach Anspruch 14,
**dadurch gekennzeichnet, dass**
der Steuerrechner zur automatischen Regelung, dem über eine oder mehrere Signalleitungen (18a-18k) als Eingangssignale Messwerte der Verdichtereintrittstemperatur oder der Umgebungstemperatur zugeführt werden, derart eingerichtet ist, dass der.Wassergehalt des durch die Gasturbinenanlage strömenden Arbeitsfluids durch zum einen die zugeführten Eingangssignale für die Arbeitsfluidtemperatur und durch zum anderen die zugeführten Eingangssignale für die Verdichtereintrittstemperatur oder die Umgebungstemperatur indirekt messbar ist.

## Claims

1. Method for determining the water content in the working fluid of a gas turbine plant, with the following steps:

   measuring several temperatures of the working fluid of the gas turbine plant at various positions in the gas turbine plant,
   measuring several pressures of the working fluid at various positions in the gas turbine plant, and
   indirectly measuring the water content of the working fluid flowing through the gas turbine plant by means of the measured pressure and temperature values.

2. Method according to claim 1, **characterised in that** firstly the working fluid temperature and secondly the compressor inlet temperature or the ambient temperature is measured and used for indirectly measuring the water content of the working fluid flowing through the gas turbine plant.

3. Method according to claim 1 or 2, **characterised in that** a pressure upstream of the turbine inlet is measured and used for indirectly measuring the water content of the working fluid flowing through the gas turbine plant.

4. Method according to claim 3, **characterised in that** as a pressure upstream of the turbine inlet, the turbine inlet pressure, the compressor outlet pressure, the combustion chamber inlet pressure ($p_4$) or the combustion chamber outlet pressure is measured.

5. Method according to any of claims 1 to 4, **characterised in that** the turbine outlet pressure or the ambient pressure and the pressure loss from the turbine outlet to a flue of the gas turbine plant are measured and used for indirectly measuring the water content of the working fluid flowing through the gas turbine plant.

6. Method according to any of claims 1 to 4, **characterised in that** the working fluid temperature at the turbine outlet ($T_7$), and the turbine inlet pressure ($p_6$) or the compressor outlet pressure ($p_3$) or
   the combustion chamber inlet pressure ($p_4$) or the combustion chamber outlet pressure ($p_5$),
   and the turbine outlet pressure ($p_7$) or the ambient pressure ($p_1$) and the pressure loss from the turbine outlet to the flue ($p_7 - p_8$),
   and the compressor inlet temperature ($T_2$) or the ambient temperature ($T_1$),
   are measured and used for indirectly measuring the water content of the working fluid flowing through the gas turbine plant.

7. Method according to any of claims 1 to 5, **characterised in that** in addition the ambient humidity is measured and the value of the ambient humidity is used to compensate for ageing or soiling effects in the gas turbine.

8. Method according to any of claims 1 to 7, **characterised in that** furthermore the setting angle of the compressor inlet guide vane row of the gas turbine plant is measured and used for indirectly measuring the water content of the working fluid flowing through the gas turbine plant.

9. Method according to any of the preceding claims, **characterised in that**, furthermore, mass flows of all supplied and discharged water/steam quantities are used for indirectly measuring the water content of the working fluid

**EP 1 959 115 B1**

flowing through the gas turbine plant.

10. Method according to claim 9, **characterised in that** supplied water as a result of an evaporation cooler is used for indirectly measuring the water content.

11. Method according to claim 9 or 10, **characterised in that** supplied water as a result of a fogging or high-fogging system is used for indirectly measuring the water content.

12. Method according to claim 9, 10 or 11, **characterised in that** discharged water as a result of a cooler is used for indirectly measuring the water content.

13. Method according to any of claims 9 to 12, **characterised in that** a water or steam injection either into the combustion chamber or into the cooling air system of the gas turbine, in order to increase power or control emissions, is used for indirectly measuring the water content.

14. Gas turbine plant comprising

- a compressor (10),
- a combustion chamber (12),
- a turbine (14) and
- a control computer for automatic regulation, to which measured values of the working fluid temperature and several pressures of the working fluid of the gas turbine plant at various positions in the gas turbine plant are supplied as input signals via one or more signal lines (18a - 18k), and which is configured such that the water content of the working fluid flowing through the gas turbine plant can be measured indirectly by means of the supplied input signals.

15. Gas turbine plant according to claim 14, **characterised in that** it has sequential combustion.

16. Gas turbine plant according to claim 14, **characterised in that** the control computer for automatic regulation, to which measured values of the compressor inlet temperature or ambient temperature are supplied as input signals via one or more signal lines (18a - 18k), is configured such that the water content of the working fluid flowing through the gas turbine plant can be measured indirectly firstly by means of the supplied input signals for the working fluid temperature and secondly by means of the supplied input signals for the compressor inlet temperature or the ambient temperature.

**Revendications**

1. Procédé pour la détermination de la teneur en eau dans le fluide de travail d'une installation de turbine à gaz, avec les étapes suivantes :

mesure de plusieurs températures du fluide de travail de l'installation de turbine à gaz à différentes positions dans l'installation de turbine à gaz,
mesure de plusieurs pressions du fluide de travail à différentes positions dans l'installation de turbine à gaz et mesure indirecte de la teneur en eau du fluide de travail s'écoulant à travers l'installation de turbine à gaz par les valeurs de pression et de températures mesurées.

2. Procédé selon la revendication 1,
**caractérisé en ce que**
d'une part, la température du fluide de travail et d'autre part la température d'entrée du compresseur ou la température ambiante sont mesurées et utilisées pour la mesure indirecte de la teneur en eau du fluide de travail s'écoulant à travers l'installation de turbine à gaz.

3. Procédé selon la revendication 1 ou 2,
**caractérisé en ce que**
une pression est mesurée avant l'admission de la turbine et utilisée pour la mesure indirecte de la teneur en eau du fluide de travail s'écoulant à travers l'installation de turbine à gaz.

**4.** Procédé selon la revendication 3,
**caractérisé en ce que**
en tant que pression avant l'admission de la turbine, la pression d'entrée de turbine, la pression de sortie du compresseur, la pression d'entrée de la chambre de combustion (p4) ou la pression de sortie de la chambre de combustion est mesurée.

**5.** Procédé selon l'une des revendications 1 à 4,
**caractérisé en ce que**
la pression de sortie de la turbine ou la pression ambiante et la perte de pression entre la sortie de la turbine et une cheminée de l'installation de turbine à gaz est mesurée et utilisée pour la mesure indirecte de la teneur en eau du fluide de travail s'écoulant à travers l'installation de turbine à gaz.

**6.** Procédé selon l'une des revendications 1 à 4,
**caractérisé en ce que**
la température du fluide de travail à la sortie de la turbine ($T_7$),
et
la pression à l'entrée de la turbine ($p_6$) ou
la pression à la sortie du compresseur ($p_3$) ou
la pression à l'entrée de la chambre de combustion ($p_4$) ou
la pression à la sortie de la chambre de combustion ($p_5$),
et la pression à la sortie de la turbine ($p_7$) ou
la pression ambiante ($p_1$) et la perte de pression entre la sortie de la turbine et la cheminée ($p_7 - p_8$)
et
la température à l'entrée du compresseur ($T_2$) ou la température ambiante ($T_1$) sont mesurées et utilisées pour la mesure indirecte de la teneur en eau du fluide de travail s'écoulant à travers l'installation de turbine à gaz.

**7.** Procédé selon l'une des revendications 1 à 5,
**caractérisé en ce que**
en outre l'humidité ambiante est mesurée et la valeur de l'humidité ambiante est utilisée pour la compensation des effets de vieillissement ou d'encrassement dans la turbine à gaz.

**8.** Procédé selon l'une des revendications 1 à 7,
**caractérisé en ce que**
en outre l'angle de réglage d'une rangée pré-directrice de compresseurs de l'installation de turbine à gaz est mesuré et utilisé pour la mesure indirecte de la teneur en eau du fluide de travail s'écoulant à travers l'installation de turbine à gaz.

**9.** Procédé selon l'une des revendications précédentes,
**caractérisé en ce que**
pour la mesure indirecte de la teneur en eau du fluide de travail s'écoulant à travers l'installation de turbine à gaz, les débits massiques de toutes les quantités d'eau/vapeur introduites et évacuées sont en outre utilisés.

**10.** Procédé selon la revendication 9,
**caractérisé en ce que**,
pour la mesure indirecte de la teneur en eau, l'eau introduite à la suite d'un refroidisseur par évaporation est utilisée.

**11.** Procédé selon la revendication 9 ou 10,
**caractérisé en ce que**
pour la mesure indirecte de la teneur en eau, l'eau introduite à la suite d'un système de «fogging » ou de « high fogging » est utilisée.

**12.** Procédé selon la revendication 9, 10 ou 11,
**caractérisé en ce que**
pour la mesure indirecte de la teneur en eau, l'eau évacuée à la suite d'un refroidisseur est utilisée.

**13.** Procédé selon l'une des revendications 9 à 12,
**caractérisé en ce que**
pour la mesure indirecte de la teneur en eau, une injection d'eau ou de vapeur soit dans la chambre de combustion soit dans le système d'air de refroidissement de la turbine à gaz est utilisée pour l'augmentation de la puissance ou pour la régulation des émissions.

14. Installation de turbine à gaz comprenant

- un compresseur (10),
- une chambre de combustion (12),
- une turbine (14) et
- un calculateur de commande

pour la régulation automatique, dans lequel sont introduites, par l'intermédiaire d'une ou de plusieurs lignes de signal (18a - 18k), en tant que signaux d'entrée, les valeurs de mesure de la température du fluide de travail et plusieurs pressions du fluide de travail de l'installation de turbine à gaz à différentes positions dans l'installation de turbine à gaz et qui est conçu de façon à ce que la teneur en eau du fluide de travail s'écoulant à travers l'installation de turbine à gaz puisse être mesurée indirectement à l'aide des signaux d'entrée introduits.

15. Installation de turbine à gaz selon la revendication 14,
**caractérisée en ce que**
elle comprend une combustion séquentielle.

16. Installation de turbine à gaz selon la revendication 14,
**caractérisée en ce que**
le calculateur de commande pour la régulation automatique, dans lequel sont introduites, par l'intermédiaire d'une ou de plusieurs lignes de signal (18a - 18k), en tant que signaux d'entrée, les valeurs de mesure de la température à l'entrée du compresseur ou de la température ambiante, est conçu de façon à ce que la teneur en eau du fluide de travail s'écoulant à travers l'installation de turbine à gaz puisse être mesurée indirectement d'une part à l'aide des signaux d'entrée introduits pour la température du fluide de travail et d'autre part à l'aide des signaux d'entrée introduits pour la température à l'entrée du compresseur ou la température ambiante.

FIG. 1

18c  18i  18a  18k  18e  18f  18g  18d  18j  18h  18b

1  20'  13  20  16  8

10  12  14  9

2  3  4  5  6  7

13

EP 1 959 115 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1231369 A2

- US 20030217554 A1